# EUROPÄISCHE PATENTSCHRIFT

(11) **EP 0 759 414 B1**
(45) Veröffentlichungstag und Bekanntmachung des Hinweises auf die Patenterteilung: **10.11.1999**
(21) Anmeldenummer: 96112665.3
(22) Anmeldetag: 06.08.1996
(51) Int. Cl.: C04B 35/589

(54) **Keramische Fasern im System Silicium-Bor-Stickstoff-Kohlenstoff**
Ceramic fibers in the system silicon-boron-nitrogen-carbon
Fibres céramiques dans le système silicium-bore-nitrogène-carbone

(30) Priorität: 18.08.1995 DE 19530404
(43) Veröffentlichungstag der Anmeldung: 26.02.1997
(73) Patentinhaber: BAYER AG, 51368 Leverkusen (DE)
(72) Erfinder: Baldus, Hans-Peter, Dr., 51379 Leverkusen (DE); Perchenek, Nils, Dr., 51373 Leverkusen (DE); Thierauf, Axel, Dr., 97072 Würzburg (DE); Herborn, Ralf, 97082 Würzburg (DE); Sporn, Dieter, 97082 Würzburg (DE)

(56) Entgegenhaltungen:
- EP-A- 0 404 503
- EP-A- 0 619 280

## Beschreibung

Die Erfindung betrifft neue amorphe, hochfeste und gleichzeitig hochtemperaturkriechbeständige SiBN(C)-Fasern, deren Herstellung und Verwendung.

Für die Entwicklung verbesserter Gasturbinen werden Werkstoffe mit hoher Schadenstoleranz und Festigkeit sowie ausgezeichneter Kriechbeständigkeit bei hohen Temperaturen (> 1300°C) gefordert. Besonderes Interesse finden hierfür Keramikfaser/Keramikmatrix-Verbundwerkstoffe (CMC-Werkstoffe).

Die bisher verfügbaren CMC-Werkstoffe weisen jedoch noch für einen Einsatz in Turbinen unzureichende Langzeitbeständigkeiten auf und sind nur bis zu Temperaturen von etwa 1100°C verwendbar.

Die Hauptursache der mangelnden Leistungsfähigkeit der derzeitigen CMC-Werkstoffe ist die unzureichende thermische und chemische Beständigkeit der verfügbaren Verstärkungsfasern, deren maximale Einsatztemperatur bei ca. 1200°C liegt. Oberhalb dieser Temperatur setzen Gefügeveränderungen (Kristallwachstum) in der Faser ein, oder es treten zeitabhängige Versagensmechanismen wie unterkritisches Rißwachstum oder Kriechschädigungen auf, die zu einer starken Degradation der Fasereigenschaften und damit zu einer inakzeptabel kurzen Lebensdauer des Verbundwerkstoffes führen. Eine weitere negative Eigenschaft vieler Fasertypen ist ihre Neigung, bei hohen Temperaturen zu kriechen. Das Kriechen führt zu einer zunehmenden Belastung der Matrix und kann somit ebenfalls ein zeitabhängiges Versagen des Verbundes nach sich ziehen. Bei nichtoxidischen Fasern verschlechtern sich die Fasereigenschaften zudem allmählich durch Oxidation oder Korrosion.

Kommerziell erhältliche amorphe bis teilkristalline Si(C,O)-Fasern, hergestellt aus Polycarbosilanen (US-A 3 529 044; 4 117 057; 4 158 687; EP-A 435 065; 438 117), sind höchstens bis 1000°C einsetzbar. Dies liegt hauptsächlich am hohen O₂ -Anteil der Fasern (ca. 12 %), der bei hohen Temperaturen zur Ausbildung einer niedrigviskosen Glasphase führt, was die Oxidation des SiC-Materials beschleunigt und für die hohe Kriechrate des Materials verantwortlich ist. Ein weiterer Effekt des hohen Sauerstoffanteils ist ein schon bei Temperaturen unterhalb 1100°C einsetzendes SiC-Kristallwachstum, das zu Gefügefehlern und einem dramatischen Festigkeitsverlust führt.

Neuentwicklungen bei den nichtoxidischen Verstärkungsfasern, wie teilkristalline SiC-Fasern mit geringem Kohlenstoffüberschuß (US-A 4 942 011) oder stöchiometrische SiC-Fasern mit nanokristallinem (US-A 5 366 943) bzw. mikrokristallinem (US-A 5 354 527) Gefüge sollen günstigere Eigenschaften aufweisen und für Temperaturen bis ca. 1300°C auch langfristig einsetzbar sein. Dies wird vor allem auf ihren geringen Restsauerstoffanteil von 0,5 Gew.% O₂ zurückgeführt. Die Fasern werden durch Pyrolyse von schmelzgesponnenen Polycarbosilanen erhalten oder aus einem Gemisch von SiC-Pulver und organischem Binder hergestellt.

Die Fasern weisen einen hohen E-Modul zwischen 280 GPa (teilkristalline Fasern) und > 400 GPa (stöchiometrische SiC-Fasern) auf. Sie zeigen erwartungsgemäß ein Oxidationsverhalten, welches dem von monolithischem, gesintertem SiC ähnelt. Die aus Polycarbosilanvorstufen hergestellten nanokristallinen Fasern weisen bei Raumtemperatur sehr gute Festigkeiten von ca. 3 GPa auf, ihre Kriechfestigkeit bei Temperaturen > 1200°C ist jedoch für den Einsatz in Gasturbinen nicht ausreichend. Die aus Siliciumcarbidpulver hergestellte Faser scheint hingegen auch oberhalb 1300°C sehr gute Kriecheigenschaften aufzuweisen. Sie besitzt jedoch aufgrund ihrer außerordentlich groben Mikrostruktur (1-2 µm Korndurchmesser) nur eine vergleichsweise geringe Zugfestigkeit von maximal 1,5 GPa.

Die Tatsache, daß die Kriecheigenschaften der Fasern mit nanokristallinem Gefüge trotz geringem Restsauerstoffgehalt ein im Vergleich zur mikrokristallinen SiC-Faser deutlich schlechteres Kriechverhalten aufweisen, macht deutlich, daß auch bei den polykristallinen, kovalenten Nichtoxidfasern ein Korngrenzenkriechen (Coble Creep) stattfindet, das von der Zusammensetzung der Grenzphase abhängig ist und die maximale Einsatztemperatur der Faser limitiert. Letztendlich bedeutet dies, daß die maximale Einsatztemperatur der bekannten SiC-Fasern durch ihre Korngröße festgelegt wird. Die für Verstärkungsfasern geforderte Mindestfestigkeit von ca. 2 GPa wird jedoch nach heutiger Kenntnis nur erreicht, wenn die SiC-Kristallite im Fasergefüge kleiner als 0,5 µm sind. Dies wiederum bedeutet, daß zur Zeit keine keramische SiC-Faser bekannt ist, die gleichzeitig sowohl das Kriterium der Kriechfestigkeit bei Temperaturen oberhalb 1300°C als auch das Kriterium einer Mindestfestigkeit von 2,0 GPa erfüllt.

Nichtoxidische Fasern auf Basis von Si₃N₄ gehen aus US-A 4 397 828 hervor. Die Si₃N₄-Faser kann bis 1200°C eingesetzt werden; ihre Festigkeit wird mit 2,2 GPa, der E-Modul mit 200 GPa angegeben. Daten zur Kriechfestigkeit werden nicht genannt. Aufgrund des teilkristallinen bis nanokristallinen Gefüges dieser Faser, des niedrigen E-Moduls und des Sauerstoffgehalts von ca. 3 Gew.-% ist eine im Vergleich zu sauerstofffreien SiC-Fasern deutlich schlechtere Kriechfestigkeit zu erwarten.

Die US-A 5 128 286 offenbart SiBN(C)(O)-Fasern mit im Vergleich zu Si₃N₄-Fasern geringfügig schlechteren Festigkeiten und E-Moduln. Diese Fasern bleiben amorph bis 1750°C. Es gibt keine Daten zur Kriechbeständigkeit. Jedoch sind die relativ hohen O₂-Gehalte (ca. 7 Gew.%) und die niedrigen E-Moduln (< 250 GPa) Indizien für eine geringe Festigkeit und Kriechbeständigkeit dieser Fasern bei hohen Temperaturen. Andere Herstellungsmethoden für SiBNC(O)-Fasern offenbaren die US-A 4 604 367 und 4 550 151.

Polymere Precursoren zur Herstellung von Siliciumnitrid, Siliciumcarbonitrid und Siliciumcarbid sind beschrieben in US-A 4 312 970; 4 650 837; 4 639 501; 4 720 532. Die Herstellung von Polyborosilazanen und keramischen Materialien daraus geht aus EP-A 389 084, 549 225, 536 698, 404 503, 424 082 sowie DE-A 43 20 782 und 43 20 783 hervor.

Die DE-OS 41 07 108 und EP-A 659 806 offenbaren schmelzbare und lösliche Polyborosilazane, die über die Ammonolyse der molekularen Einkomponenten-Precursoren Cl₃Si-NH-BCl₂ (TADB) bzw. (Cl₃Si-NH)₂-BCl (TACB) hergestellt werden. Die aus diesen Polymeren durch Pyrolyse gewonnenen keramischen Materialien zeichnen sich durch ausgezeichnete Oxidationsbeständigkeit sowie Erhalt des amorphen Zustandes bis mindestens 1800°C aus (Atmosphäre N₂, Haltezeit 6 h).

Stand der Technik bei der Herstellung keramischer Endlosfasern aus polymeren Vorstufen ist das Multifilamentspinnen aus schmelzbaren oder löslichen Vorstufen, wie es beispielsweise in DE-A 43 20 782 und 43 20 783 beschrieben ist. Dabei wird die aus der herkömmlichen Spinntechnik bekannte Extrusionstechnik zum Druckaufbau an der Düsenplatte eingesetzt. Diese Extrusionstechnik hat den Nachteil, daß Dichtigkeitsprobleme am Schneckenvortrieb bei hohen Temperaturen den Ausschluß von Luftfeuchtigkeit oder Sauerstoff erschweren. Dies führt auch zu einem Verlust von Lösemittel aus dem Polymer, was eine Veränderung der Rheologie und damit der Verspinnbarkeit zur Folge hat. Weiterhin ist bei schmelzgesponnenen Fasern die Aushärtung mit Sauerstoff Stand der Technik.

Bislang ist es nicht gelungen, den kompletten Herstellungsprozeß der Faser, d.h. Spinnen, Trocknung, Vernetzung der Grünfaser sowie Pyrolyse und Sintern komplett unter definierten Atmosphären durchzuführen.

Es ist nun gelungen, amorphe keramische SiBN(C)-Fasern mit einer Raumtemperaturfestigkeit > 2,5 GPa, einem E-Modul > 250 GPa und einem Kriechparameter m von > 0,4 bis 1 (nach Standard-BSR-Test, 1 Stunde, 1400°C) und einem Sauerstoffgehalt von 0,001 bis 1,5 Gew.% herzustellen.

Die erfindungsgemäßen Fasern bleiben unter Inertgas bis mindestens 1800°C im amorphen Zustand und sind bis mindestens 1400°C, bevorzugt bis mindestens 1500°C stabil an Luft. Ihre Raumtemperaturfestigkeit ist >2,5 GPa. Sie beträgt bevorzugt > 2,5 bis 4,5 GPa, besonders bevorzugt 3,0 bis 4,5 GPa. Die Festigkeit bei 1400°C ist >1,5 GPa, bevorzugt 1,5 bis 3,5 GPa, besonders bevorzugt 2,1 bis 3,0 GPa auf (siehe Tabelle 1)

**Tabelle 1:**

| Festigkeit erfindungsgemäßer SiBN(C)-Fasern nach Auslagerung an Luft (Mittelwerte) | | | | | |
|---|---|---|---|---|---|
| Auslagerungszeit [h] | Temperatur [°C] | | | | |
| | 20 | 1000 | 1200 | 1400 | 1500 |
| 0 | 3,5 GPa | | | | |
| 10 | | 3,0 GPa | 3,2 GPa | 3,1 GPa | 3,0 GPa |
| 20 | | 3,0 GPa | 3,0 GPa | 2,9 GPa | 2,9 GPa |
| 30 | | 3,0 GPa | 2,9 GPa | 2,7 GPa | 2,9 GPa |
| 40 | | 2,9 GPa | 2,8 GPa | 2,8 GPa | 2,6 GPa |
| 50 | | 2,9 GPa | 2,8 GPa | 2,7 GPa | 2,5 GPa |

Die E-Moduln der erfindungsgemäßen Fasern sind bei Raumtemperatur >250 GPa. Sie betragen bevorzugt > 250 bis 450 GPa, besonders bevorzugt 350 bis 450 GPa. Bei 1400°C betragen sie bevorzugt 200 bis 300 GPa.

Zur Bestimmung der Kriechbeständigkeit bei Temperaturen > 1300°C wurden Standard-Kriechtests nach der Methode von DiCarlo et al. durchgeführt (**B**end **S**tress **R**elaxation **T**est, DiCarlo et al., Proceedings of 3rd. NASA HITEMP Review, Oct. 1990, pp. 49-1 - 49-8). Der Kriechparameter m kann Werte zwischen 0 und 1 annehmen. Je größer der Wert, desto besser die Kriechbeständigkeit. Bei der Temperatur, bei der ein Langzeiteinsatz beabsichtigt ist, sollte der Kriechparameter m den Wert 0,4 überschreiten.

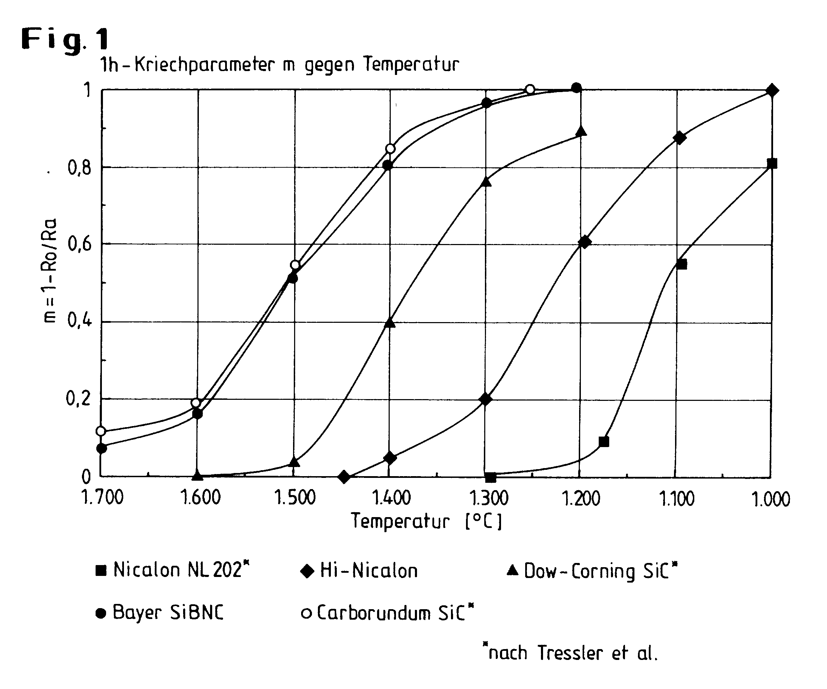

Die erfindungsgemäße Faser besitzt einen Kriechparameter (m-Wert) größer als 0,4 nach dem Standard-BSR-Test an Luft bei 1400°C. Dies ist aufgrund des jetzigen Wissens über die mechanischen Eigenschaften amorpher bzw. teilkristalliner und nanokristalliner Fasern bei hohen Temperaturen völlig unerwartet. Sauerstoffarme (<1 Gew.-% O₂) teilkristalline SiC-Fasern (Hi-Nicalon, Nippon Carbon) weisen z.B. beim Standard BSR-Test (1 Stunde, 1400°C) m-Werte von 0, die nanokristallinen (<0,5 Gew.-% O₂) SiC-Fasern (Dow Corning) einen m-Wert von 0,35 auf. Alle bisher bekannten nichtoxidischen Fasern mit Sauerstoffgehalten >2 Gew.-% weisen schon nach einer Auslagerung bei einer Temperatur von ca. 1200°C einen m-Wert von 0 auf. Fig. 1 zeigt m-Werte für verschieden Fasertypen bei Temperaturen zwischen 1000 und 1700°C.

Die erfindungsgemäßen SiBN(C)-Fasern können hergestellt werden aus Polyborosilazanen, die die folgenden Elementverhältnisse aufweisen:
N/Si: 0,5-4; B/Si: 0,1-1; O/Si: 0,0001-0,1; C/Si: 0,0001-1,3; H/Si: 0,001-20.

Das Prolysat der eingesetzten Polyborosilazane soll bei Pyrolysetemperaturen bis 1600°C amorph sein und keine kristallinen Ausscheidungen von Bornitrid, Siliciumnitrid, Siliciumcarbid oder Borcarbid aufweisen. Unter Anwendungsbedingungen muß die amorphe Struktur des Materials bei Temperaturen >1300°C mindestens für 1000 Stunden erhalten bleiben.
Eine Kristallisation der amorphen Faser führt zu Kornwachstum, was eine deutliche Verminderung der Festigkeit zur Folge hat, sowie zu einer Verringerung der Kriechbeständigkeit durch Korngrenzenkriechen (Coble Creep).

Bevorzugt werden die erfindungsgemäßen Fasern aus Polyborosilazanen mit einem Sauerstoffgehalt von 0,001 bis 1,5 Gew.-% hergestellt, da sich ein geringer Sauerstoffgehalt des Polymers günstig auf die Eigenschaften der erhaltenen Fasern auswirkt. Sauerstoffgehalte der Faser oberhalb von 1,5 Gew.-% verursachen früher einsetzende Kristallisation, begünstigt durch Flüssigphasendiffusion über die sich ab 1000°C bildende niedrigviskose Glasphase. Sowohl die Kristallisation als auch die niedrigviskose Glasphase verursachen wiederum Festigkeitsverluste und Erhöhung der Kriechrate.

Für einen Schmelzspinnprozeß ist es vorteilhaft, wenn die eingesetzten Polyborosilazane einen Schmelzpunkt zwischen 80 und 250°C aufweisen und über längere Zeit, d.h. mindestens 6 Monate, lagerstabil sind.

Besonders gut geeignet zur Herstellung der erfindungsgemäßen Fasern sind die in DE-A 41 07 108 und EP-A 659 806 offenbarten Polyborosilazane.

Neben den geeigneten polymeren und keramischen Materialien benötig man jedoch zur Herstellung einer sauerstoffarmen, hochfesten keramischen Faser die entsprechende Spinn- und Pyrolysetechnologie.

Gegenstand der Erfindung ist daher auch ein Verfahren zur Herstellung der erfindungsgemäßen Fasern, mit dem präkeramische Polyborosilazane durch Trocken- oder Schmelzspinnen in Grünfasern umgewandelt und diese anschließend getrocknet, unschmelzbar gemacht und pyrolysiert werden.

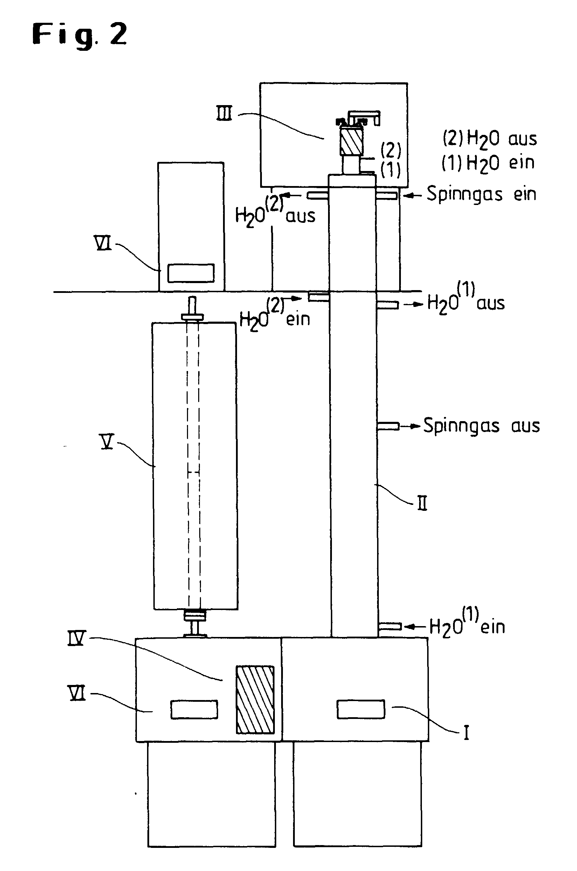

Erfindungsgemäß müssen Endlosfasern aus atmosphärisch empfindlichen Precursoren in kontrollierter inerter (N₂, Ar, He etc.) oder reaktiver Atmosphäre (z.B. NH₃, Amine, Borane, Silane) versponnen werden. Die so hergestellten Grünfasern müssen anschließend in kontrollierter Atmosphäre gehärtet und pyrolysiert werden. Alle Zwischenschritte, die Handhabung und Lagerung der Fasern müssen unter kontrollierter Atmosphäre stattfinden. Dies läßt sich am besten erreichen, wenn alle Prozeßschritte in einer einzigen Anlage durchgeführt werden können. Eine solche Anlage ist in Fig. 2 schematisch wiedergegeben.

Sie ist aus folgenden Komponenten aufgebaut:
1. Einer ersten Box, aufgebaut aus Glove-Boxen (MB 150B-G-I, M.Braun GmbH, D-85748 Garching) mit Lösungsmittelfilter, Handschuhpaaren, Analysatoren für Sauerstoff und Wasser.
2. Einem integrierten Kreuzspulkopf (I), fadenspannungsgesteuert oder mit stufenlos regelbarer Aufspulgeschwindigkeit sowie stufenlos regelbarer Kreuzwickelgeschwindigkeit, bestehend aus einem Drehstrommotor und einer Ziehtrommel.
3. Einem Trockenturmspinnschacht (II) mit Spinngasrückführung, bestehend aus einem thermisch isolierten Doppelmantelrohr, das in 3 Zonen im Temperaturbereich von -70°C bis +250°C geheizt oder gekühlt werden kann, und Thermostaten. Der Schacht ist mit PTFE-Dichtungen gegen Glovebox und Gasschleuse abgedichtet. Im Inneren befinden sich Spinngasrückführungen, die ein gerichtetes Anströmen der Fasern in und gegen die Ziehrichtung mit definierten Atmosphären zur Härtung der Fasern ermöglichen.
4. Einer zweiten Box, aufgebaut aus Glove-Boxen (Labmaster, M.Braun GmbH, D-85748 Garching) als Gasschleuse zur gasdichten Ankopplung des Spinnkopfes an die Spinnanlage sowie als Vorratsraum für das Polymer. Die Gasschleuse ist so ausgeführt, daß ein Rückfluß des Spinngases vermieden wird. Zur separaten Kühlung von Trockenschacht und Spinnkopf wird die Gasschleuse wassergekühlt.
5. Einem inertisierten Spinnkopf (III) für das zu verspinnende Polymer, ausgeführt entweder als Druck- oder als Extrudereinheit, bestehend aus einem Düsenkopf, Schnellkupplungen für das Kühl- bzw. Heizmedium, einer Schnellkupplung für die Gasatmosphäre und einem Temperaturfühler für die Thermostatsteuerung.
6. einem inertisierten Gasreaktor (IV) zum Nachvernetzen des Polyborosilazans, bestehend aus einem Glasreaktor mit gasdichten Zuleitungen und Ableitungen für Wärmeträgeröl und Ammoniak, Silane, Borane, Amine und andere zur Härtung geeignete Reaktivgase.
7. Einem inertisierten, fadenspannungsgesteuerten Faserpyrolyseofen (V), ausgeführt als mindestens vierzoniger Silitofen mit einer Gesamtlänge von 2000 mm. Der Ofen ist ausgangsseitig mit Gasschleusen für das Pyrolysegas versehen. Zur Inertisierung ist der Ofen doppelwandig mit separater Wandspülung versehen. Der Fasertransport erfolgt über zwei zugkraftgesteuerte Faserwicklungen (VI).

Die Herstellung der erfindungsgemäßen Fasern erfolgt unter Inertbedingungen, d.h. mit einem Restsauerstoffanteil < 2 ppm, der Wassergehalt ist < 0,1 ppm. Sie verläuft in folgenden Schritten:
1. Die Polyborosilazan-Spinnmasse wird unter Ausschluß von Luft und Feuchtigkeit in den Vorratsbehälter eingefüllt. Dieser besteht aus einem doppelwandigen, temperierbaren Druckgefäß, das mit Schnellkupplungen für die Versorgung mit dem Temperiermedium, z.B. Wärmeträgeröl, versehen ist. Man kann Temperaturen im Bereich von -70 bis + 300° einstellen. Die bevorzugten Spinntemperaturen beim Verspinnen des Polyborosilazans liegen bei 60 bis 250°C.
   Die beim Faserspinnen verwendeten Gas- oder Extruderdrücke liegen zwischen 0,1 und 15 MPa. Anlagenseitig ist der Druckbehälter mit einem Mehrfachdüsenkopf zum Mono- und Multifilamentspinnen versehen, an dessen Ende ein Temperaturfühler angebracht ist. Durch Entkoppeln der Versorgungsmedien ist es möglich, den Druckbehälter in die Inertspinnanlage einzuschleusen und ihn mit dem zu verspinnenden Material unter kontrollierter Atmosphäre zu befüllen. Nach dem Befüllen wird der gasdichte Druckbehälter auf den Trockenschacht über die Gasschleuse angeflanscht.
2. Der Düsenkopf wird unter Ausschluß von Luft und Feuchtigkeit an die Inertspinnanlage angekoppelt. Dies geschieht über ein speziell hierfür entwickeltes Adapterstück, eine Gasschleuse mit integrierter Ringspaltdüse für das Spinngas anlagenseitig und einem bajonettartigen Verschluß auf der Seite des Druckbehälters.
3. Durch Anlegen eines Überdrucks der gewünschten Atmosphäre, z.B. einer N₂/NH₃-Mischung und Einstellen der vorgesehenen Temperatur im Spinnkopf wird der Faserspinnprozeß eingeleitet.
4. Die Fasern werden unter kontrollierter Atmosphäre und kontrollierten thermischen Bedingungen gesponnen bzw. gezogen. Das Faserziehen oder Faserspinnen wird im temperierten Trockenschacht durch eine gerichtete Spinngasströmung unterstützt. Das Spinngas wird über eine Membrampumpe teilweise zurückgeführt. Im Trockenschacht erstarren die Fasern unter Zugspannung in einer kontrollierten Atmosphäre. Dieser Spinnverzug führt zu einer Verstreckung der entstehenden Grünfasern mit einem Verstreckungsfaktor von 10-100. Die Verstreckung der Grünfaser resultiert in einer Ausrichtung der Si-N-B-Bindung in Faserrichtung (Bindungstextur) in der ansonsten amorphen Faser. Die Festigkeitserhöhung bei Reduktion des Faserdurchmessers ist überproportional und kann mit der Bindungstextur in höchstfesten Polymerfasern verglichen werden. Der zum Spinnverzug notwendige Kreuzspulkopf wickelt die Fasern anschließend mehrlagig auf Ziehtrommeln unterschiedlicher Durchmesser auf. Die Ziehgeschwindigkeiten betragen 0 bis 600 m/min. Die Ziehtrommel kann z.B. aus Graphit bestehen. Die Polyborosilazangrünfasern können mit Spinngeschwindigkeiten von 10 bis 1000 m/min gesponnen werden. Man bläst die Fasern zweckmäßigerweise gleichzeitig mit heißem Reaktiv- oder Inertgas (z.B. NH₃, N₂) an, um die Nachvernetzung zu unterstützen.
5. Die hergestellten Polyborosilazangrünfasern werden unter kontrollierter Atmosphäre nachbehandelt. Dies kann z.B. mit N₂, NH₃ oder mit sauerstofffreien Verbindungen geschehen, die zu einer Vernetzungsreaktion mit N-H-Gruppen in der Lage sind. Dazu gehören z.B. Verbindungen wie Hydrazin oder solche, die mindestens eine Si-H-Bindung oder B-H-Bindung aufweisen. Besonders bevorzugt sind hier gasförmige Borane, niedrigsiedende Boran-Addukte sowie leicht verdampfbare Silane. Es können auch Mischungen dieser Komponenten verwendet werden.
   Die Nachvernetzung der Grünfasern wird, soweit sie nicht schon in situ im Trockenschacht abgeschlossen ist, in einem integrierten, thermostatisierbaren Glasreaktor durchgeführt. Die Zu- und Ableitung des Wärmeträgermediums und des Reaktiv- oder Inertgases erfolgt über VA-Stahlleitungen. Zum Befüllen und Entleeren des Reaktors mit zu vernetzenden Fasern oder nicht gasförmigen Vernetzungsmedien kann das Innenvolumen des Reaktors mit Inertgas gespült werden, so daß kein Reaktivmedium (Gas) in den Innenraum der Inertspinnanlage gelangt. Die Vernetzung der Grünfasern aus Polyborosilazan wird, je nach verwendetem Vernetzer, bei einer Temperatur von 20°C bis 300°C durchgeführt. Die Nachvernetzungszeit beträgt je nach Vernetzer zwischen 2 Sekunden und 100 Stunden.
6. Die Grünfasern werden in kontrollierter Atmosphäre, z.B. in Mischungen aus N₂ und NH₃ im Verhältnis von 1: 10 bis 100:1, pyrolysiert und gesintert.
   Für die kontinuierliche, fadenspannungsgesteuerte Pyrolyse der Grünfasern wurde eine spezielle Ofeneinheit mit vier Heizzonen entwickelt, die unter Inertgas betrieben werden kann. Die Fasern werden fadenspannungsgesteuert mit einer definierten Vortriebsgeschwindigkeit von 1 bis 600 m/h in der Ofeneinheit pyrolysiert. Es können zwischen 20 und 2000 Filamente gleichzeitig kontinuierlich pyrolysiert werden. Die Pyrolysetemperatur beträgt 1200 bis 1800°C.
   Anschließend werden die Multifilamente mit üblichen Beschlichtungsmitteln zwecks besserer Handhabung beschlichtet und auf eine Rolle aufgewickelt.

Gegenstand der Erfindung ist ebenfalls die Verwendung der erfindungsgemäßen Fasern als Verstärkungsfaser in metallischen oder keramischen Bauteilen. Dazu werden die Fasern in der dem Fachmann bekannten Weise in die Bauteile eingebracht.

Die erfindungsgemäßen Fasern lassen sich außerdem wegen ihrer Beständigkeit bei hohen Temperaturen und ihrer geringen Anfälligkeit gegen oxidativen oder chemischen Angriff als Hochtemperaturfiltermaterial verwenden.

### Beispiele

### Beispiel 1 Polymerherstellung

1000 ml Methylamin werden in einem evakuierten 5000 ml Dreihalskolben mit 5000 ml Tropftrichter ohne Druckausgleichsrohr bei -78°C einkondensiert. Anschließend gibt man eine Lösung von 300 g Cl₃Si-NH-BCl₂ in 2500 ml Petroläther unter starkem Rühren so zu, daß die Innentemperatur nicht über 0°C ansteigt. Der Feststoff, der im wesentlichen aus Methylaminhydrochlorid besteht, wird über eine Umkehrfritte abfiltriert. Von der klaren Petrolätherlösung wird das Lösungsmittel unter vermindertem Druck abdestilliert. Es bleibt ein farbloses zähflüssiges Öl zurück (250 g).

Das Öl wird anschließend 10 Minuten lang bei 240°C zu einem festen Polyborosilazan thermisch vernetzt. Das Polymer weist einen Schmelzpunkt von 200°C auf.

Zusammensetzung in Gew.-%: Si: 18,0; B: 7,5; N: 37,4; H: 8,1; C:28,1; O: 0,4

### Beispiel 2 Herstellung der Grünfaser

Aus dem nach Beispiel 1 hergestellten Polymer werden Fasern gesponnen. Die Viskosität des Polymers liegt während des Spinnens bei ca. 2 Pas. Es werden 100 Filamente gleichzeitig ersponnen. Während des Spinnvorganges wird die Faser im Trockenturm zur weiteren Vernetzung mit heißem Stickstoff angeblasen. Die Spinnparameter sind in Tabelle 1 aufgelistet.

**Tabelle 1.**

| Spinnparameter für das Polymer aus Beispiel 1 | | | |
|---|---|---|---|
| Spinntemperatur | Spinndruck | Ziehgeschwindigkeit | Faserdurchmesser |
| 175°C | 5,0 MPa | 5 - 20 m/min | ca. 50 - 100 µm |
| 180°C | 1,0 - 4,0 MPa | 5 - 200 m/min | ca. 5 - 70 µm |
| 185°C | 0,5 - 3,0 MPa | 5 - 50 m/min | ca. 5 - 50 µm |
| 190°C | 0,5 - 1,0 MPa | 5 - 10 m/min | ca. 5 - 40 µm |

Der optimierte Parameterbereich für das Verspinnen des Polymers aus Beispiel 1 liegt bei einer Düsentemperatur von 180°C und einem Spinndruck von 2 MPa. Bei einer Ziehgeschwindigkeit von 200 m/min besitzen die Fasern dann einen Durchmesser von ca. 20 µm in der nicht-pyrolysierten Faser (Gelfaser) und ca. 12 µm in der bei 1450°C pyrolysierten Faser. Es werden Fasern mit Längen zwischen 40 km und 100 km kontinuierlich gezogen. Eine Schwankung des Faserdurchmessers wird bei konstant gehaltenen Parametern während des Spinnens nicht beobachtet. Die Fasern schmelzen bei ca. 210°C auf.

### Beispiel 3 Grünfaserherstellung

Analog Beispiel 2 werden 100 Filamente gleichzeitig ersponnen, jedoch wird die Faser während des Spinnvorganges im Trockenturm mit heißem Ammoniak angeblasen.

Der optimierte Parameterbereich für das Verspinnen liegt bei einer Düsentemperatur von 190°C und einem Spinndruck von 2,5 MPa. Bei einer Ziehgeschwindigkeit von 200 m/min besitzen die Fasern dann Durchmesser von ca. 18 µm in der nicht-pyrolysierten Faser (Gelfaser) und ca. 11 µm in der bei 1450°C pyrolysierten Faser. Es werden Fasern mit Längen zwischen 40 km und 100 km kontinuierlich gezogen. Eine Schwankung des Durchmessers der Fasern wird bei konstant gehaltenen Parametern während des Spinnens nicht beobacht. Die Fasern schmelzen nicht mehr auf und können sofort bis 1500°C pyrolysiert werden. Dabei erhalten die Einzelfilamente ihre Form, besitzen ein glatte Oberfläche und sind nicht miteinander verklebt.

### Beispiel 4 Unschmelzbarmachen der Grünfaser

300 g Grünfasern aus Beispiel 2 werden auf der Rolle unter Inertbedingungen in einen Reaktor eingebracht. Der Reaktor wird außerdem mit 5 g Dichlorsilan beladen und anschließend auf 40°C aufgeheizt, so daß das Dichlorsilan verdampfen kann. Nach ca. 2 Stunden werden die Fasern aus dem Reaktor entfernt. Nach der anschließenden Pyrolyse in Stickstoffatmosphäre bis 1500°C haben die Einzelfilamente ihre Form erhalten, besitzen eine glatte Oberfläche und sind nicht miteinander verklebt.

### Beispiel 5 Unschmelzbarmachen der Grünfaser

300 g Grünfasern aus Beispiel 2 werden auf der Rolle unter Inertbedingungen in einen Reaktor eingebracht. Der Reaktor wird außerdem mit 5 g Boran-Dimethylamin-Komplex beladen und anschließend auf 120°C aufgeheizt. Nach ca. 2 Stunden werden die Fasern aus dem Reaktor entfernt. Nach der anschließenden Pyrolyse in Stickstoffatmosphäre bis 1500°C haben die Einzelfilamente ihre Form erhalten, besitzen eine glatte Oberfläche und sind nicht miteinander verklebt.

### Beispiel 6 Kontinuierliche Pyrolyse der Grünfaser

Die vernetzten Grünfasern (100 Filamente) aus Beispiel 3 werden kontinuierlich mit 10 m/h und einer Zugkraft von 0,3 N durch den Pyrolyseofen gezogen.

Die keramisierten Filamente werden kontinuierlich durch eine Schlichte aus Polyvinylalkohol gezogen und aufgewickelt. Der Grünfaserdurchmesser beträgt 18 µm, der Durchmesser der keramisierten Faser 11 µm.
Physikalische Daten der keramisierten Fasern:
Zusammensetzung in Gew.%: Si: 33,9; B: 12,0; N: 39,5; C: 13,3; O: 0,8;
Zugfestigkeit bei Raumtemperatur: 3,3 GPa;
Zugfestigkeit nach Auslagerung an Luft für 30 Stunden bei 1400°C: 2,7 GPa;
E-Modul: 390 GPa;
Kriechbeständigkeit (Standard BSR-Test, 1400°C, 1h): m = 0,58.

### Beispiel 7 Kontinuierliche Pyrolyse der Grünfaser

Die vernetzten Grünfasern (100 Filamente) aus Beispiel 4 werden kontinuierlich mit 10 m/h und einer Zugkraft von 0,4 N durch den Pyrolyseofen gezogen.

Die keramisierten Filamente werden kontinuierlich durch eine Schlichte aus Polyvinylalkohol gezogen und aufgewickelt. Der Grünfaserdurchmesser beträgt 20 µm, der Durchmesser der keramisierten Faser 12 µm.

Physikalische Daten der keramisierten Fasern:
Zusammensetzung in Gew.%: Si: 34,5; B: 11,9; N: 39,0; C: 13,5; O: 0,9;
Zugfestigkeit bei Raumtemperatur: 3,0 GPa;
Zugfestigkeit nach Auslagerung an Luft für 30 Stunden bei 1400°C: 2,5 GPa;
E-Modul: 360 GPa;
Kriechbeständigkeit (Standard BSR-Test, 1400°C, 1h): m = 0,54.

### Beispiel 8 Kontinuierliche Pyrolyse der Grünfaser

Die vernetzten Grünfasern (100 Filamente) aus Beispiel 5 werden kontinuierlich mit 10 m/h und einer Zugkraft von 0,4 N durch den Pyrolyseofen gezogen. Die keramisierten Filamente werden kontinuierlich durch eine Schlichte aus Polyvinylalkohol gezogen und aufgewickelt. Der Grünfaserdurchmesser beträgt 20 µm, der Durchmesser der keramisierten Faser beträgt 12 µm.

Physikalische Daten der keramisierten Fasern:
Zusammensetzung in Gew.%: Si: 34,2; B: 12,3; N: 39,3; C: 13,1; O: 0,7;
Zugfestigkeit bei Raumtemperatur: 3,1 GPa;
Zugfestigkeit nach Auslagerung an Luft für 30 Stunden bei 1400°C: 2,6 GPa;
E-Modul: 380 GPa;
Kriechbeständigkeit (Standard BSR-Test, 1400°C, 1h): m = 0,55

## Patentansprüche

1. Amorphe keramische SiBN(C)-Fasern mit einer Raumtemperaturfestigkeit > 2,5 GPa, einem E-Modul > 250 GPa und einem Kriechparameter m von größer 0,4 bis 1, nach Standard-BSR-Test , 1 Stunde, 1400°C, und einem Sauerstoffgehalt von 0,001 bis 1,5 Gew.%.

2. Verfahren zur Herstellung der SiBN(C)-Fasern gemäß Anspruch 1, dadurch gekennzeichnet, daß präkeramische Polyborosilazane durch Trocken- oder Schmelzspinnen in Grünfasern umgewandelt und diese anschließend getrocknet, unschmelzbar gemacht und pyrolysiert werden.

3. Verfahren nach Anspruch 2, dadurch gekennzeichnet, daß Polyborosilazane mit folgenden Elementverhältnissen:
N/Si: 0,5-4;
B/Si: 0,1-1;
O/Si: 0,0001-0,1;
C/Si: 0,0001-1,3;
H/Si: 0,001-20 eingesetzt werden.

4. Verfahren nach Anspruch 2, dadurch gekennzeichnet, daß Polyborosilazane mit einem Sauerstoffgehalt von 0,001 bis 1,5 Gew.-% eingesetzt werden.

5. Verwendung der SiBN(C)-Fasern gemäß Anspruch 1 als Verstärkungsfaser in metallischen oder keramischen Bauteilen.

6. Verwendung der SiBN(C)-Fasern gemäß Anspruch 1 als Hochtemperaturfiltermaterial.

## Claims

1. Amorphous SiBN(C) ceramic fibres having a room temperature strength of > 2.5 GPa, a modulus of elasticity of > 250 GPa and a creep parameter m of from > 0.4 to 1, measured by the standard BSR test, 1 hour, 1400°C, and an oxygen content of from 0.001 to 1.5% by weight.

2. Process for producing the SiBN(C) fibres according to Claim 1, characterized in that preceramic polyborosilazanes are converted into green fibres by dry or melt spinning and these are subsequently dried, made infusible and pyrolysed.

3. Process according to Claim 2, characterized in that polyborosilazanes having the following element ratios:
N/Si: 0.5-4;
B/Si: 0.1-1;
O/Si: 0.0001-0.1;
C/Si: 0.0001-1.3;
H/Si: 0.001-20 are used.

4. Process according to Claim 2, characterized in that polyborosilazanes having an oxygen content of from 0.001 to 1.5% by weight are used.

5. Use of the SiBN(C) fibres according to Claim 1, as reinforcing fibres in metallic or ceramic components.

6. Use of the SiBN(C) fibres according to Claim 1 as high-temperature filter material.

## Revendications

1. Fibres SiBN(C) de céramique amorphes avec une résistance à la température ambiante > 2,5 GPa, un module E > 250 GPa et un paramètre de fluage m supérieur à 0,4 à 1, selon le test standard BSR, 1 heure 1400°C, et une teneur en oxygène de 0,001 à 1,5 % en poids.

2. Procédé de préparation des fibres SiBN(C) selon la revendication 1, caractérisé en ce que on transforme du polyborosilazane précéramique par filage à sec ou à l'état fondu en fibres fraîches et finalement on sèche, celles-ci, on les rend infusibles et on les pyrolyse.

3. Procédé selon la revendication 2, caractérisé en ce que l'on utilise du polyborosilazane ayant les rapports d'élément suivant :
N/Si : 0,5-4 ;
B/Si : 0,1-1;
O/Si : 0,0001-0,1;
C/Si : 0,0001-1,3 ;
H/Si : 0,001-20.

4. Procédé selon la revendication 2, caractérisé en ce que l'on utilise du polyborosilazane avec une teneur en oxygène de 0,001 à 1,5 % en poids.

5. Utilisation des fibres de SiBN(C) selon la revendication 1 comme fibres de renforcement dans des pièces métalliques ou céramiques.

6. Utilisation des fibres de SiBN(C) selon la revendication 1 comme matériau de filtre à température élevée.
